# EUROPÄISCHE PATENTANMELDUNG

(11) **EP 3 425 356 A1**
(43) Veröffentlichungstag der Anmeldung: **09.01.2019**
(21) Anmeldenummer: 18180018.6
(22) Anmeldetag: 27.06.2018
(51) Int. Cl.: G01K 1/20

(54) **MESSSONDE**

(30) Priorität: 05.07.2017 DE 102017114987
(71) Anmelder: Miele & Cie. KG, 33332 Gütersloh (DE)
(72) Erfinder: Schmull, Timo, 33775 Versmold (DE); Schröder, Matthias, 59320 Ennigerloh (DE); Schmid, Thomas, 83317 Teisendorf (DE)

(57) **Zusammenfassung**

Die vorliegende Erfindung betrifft eine Messsonde (1), insbesondere Messspieß (10), zur Erfassung einer Temperatur eines Garguts (100) in einem Garraum (12) eines Gargeräts (2) während eines Garvorgangs. Die Messsonde (1) umfasst einen Temperatursensor (11) und ein Sondenelement (3) zum Anordnen in und/oder an dem Gargut (100). Dabei ist ein Mantelwellenfilter (4) zur Dämpfung von sich im Bereich der Messsonde (1) ausbreitenden Mantelwellen vorgesehen, welche durch eine zum Garen in den Garraum (12) eingebrachte Hochfrequenzstrahlung hervorgerufen werden.

## Beschreibung

Die vorliegende Erfindung betrifft eine Messsonde und insbesondere einen Messspieß zur Erfassung einer Temperatur eines Garguts in einem Garraum eines Gargeräts während eines Garvorgangs. Die Messsonde umfasst wenigstens einen Temperatursensor und wenigstens ein Sondenelement zum Anordnen in und/oder an dem Gargut.

Um bei der Zubereitung von Speisen in einem Gargerät möglichst optimale Ergebnisse erzielen zu können, ist eine Bestimmung des Fertigzeitpunktes oft sehr hilfreich. Dann kann der Garvorgang automatisch beendet bzw. das Gargerät automatisch abgeschaltet werden oder in eine andere Betriebsart gewechselt werden. Eine nützliche Aussage über den Fertigzeitpunkt liefert in der Regel die Kerntemperatur des Garguts. Dazu werden in der Regel Messsonden und zum Beispiel Messspieße verwendet.

Allerdings kann der Einsatz eines Messspießes problematisch sein, wenn das Gargut in dem Gargerät mit Mikrowellenstrahlung erwärmt wird. Dann werden regelmäßig nicht nur das Gargut durch dielektrische Verluste erwärmt, sondern auch auf dem meist metallischen Messspieß erhebliche joulesche Verluste erzeugt. Dadurch wird thermische Energie in den Spieß eingebracht. Das führt mitunter dazu, dass der Messwert deutlich höher ist als die tatsächliche Kerntemperatur im Gargut. Zudem kommt es z. B. bei Fleischstücken regelmäßig vor, dass das Fleisch an der Einstichstelle des Spießes verbrennt bzw. sich überdurchschnittlich schnell erwärmt und insgesamt inhomogen erwärmt wird.

Es ist daher die Aufgabe der vorliegenden Erfindung, einen verbesserten und zuverlässigen Einsatz einer Messsonde auch dann zu ermöglichen, wenn zum Garen Hochfrequenzstrahlung bzw. Mikrowellenstrahlung eingesetzt wird.

Diese Aufgabe wird gelöst durch eine Messsonde mit den Merkmalen des Anspruchs 1 sowie durch ein Gargerät gemäß Anspruch 15. Bevorzugte Merkmale sind Gegenstand der Unteransprüche. Weitere Vorteile und Merkmale ergeben sich aus der allgemeinen Beschreibung der Erfindung und der Beschreibung der Ausführungsbeispiele.

Die erfindungsgemäße Messsonde ist insbesondere als ein Messspieß ausgebildet. Die Messsonde dient zur Erfassung einer Temperatur eines Garguts in einem Garraum eines Gargeräts während eines Garvorgangs. Die Messsonde umfasst wenigstens einen Temperatursensor und wenigstens ein Sondenelement zum Anordnen in und/oder an dem Gargut. Dabei umfasst die Messsonde wenigstens ein Mantelwellenfilter zur Dämpfung von Mantelwellen, welche durch eine zum Garen in den Garraum eingebrachte Hochfrequenzstrahlung hervorgerufen werden. Dabei dient der Mantelwellenfilter insbesondere zur Dämpfung von sich im Bereich der Messsonde ausbreitenden Mantelwellen.

Die erfindungsgemäße Messsonde bietet viele Vorteile. Einen erheblichen Vorteil bietet der Mantelwellenfilter zur Dämpfung der Mantelwellen. Dadurch kann die erfindungsgemäße Messsonde besonders gut und zuverlässig auch dann eingesetzt werden, wenn zum Garen Hochfrequenzstrahlung in den Garraum eingebracht wird. Durch die Dämpfung der Mantelwellen gelangt nur noch ein stark gedämpfter Anteil der ursprünglichen Mantelwelle in das Gargut. Auf diese Weise ist die Erwärmung durch dielektrische Verluste nicht vorwiegend am Einstechort sondern homogener über das Gargut verteilt. Die erfindungsgemäße Sonde verhindert damit die überhöhte Erwärmung am Einstichort, die bis hin zu Verbrennungen führen kann. Zusätzlich werden die jouleschen Verluste in der Messsonde erheblich reduziert. So wird einer ungünstigen Erwärmung der Messsonde entgegengewirkt. Dadurch können Übergarungen oder Verbrennungen des Garguts am Einstichort vermieden oder zumindest erheblich reduziert werden. Somit wird auch einer inhomogenen Erwärmung des Garguts entgegengewirkt. Besonders vorteilhaft ist auch, dass durch die Dämpfung der Mantelwellen eine korrekte bzw. reproduzierbare Messung der Kerntemperatur möglich ist.

Vorzugsweise umfasst der Mantelwellenfilter wenigstens eine Hülse. Der Mantelwellenfilter kann auch als eine Hülse ausgebildet sein. Eine solche Hülse bietet eine besonders wirksame Dämpfung der Mantelwellen und kann unaufwendig und kostengünstig umgesetzt werden. Insbesondere ist der Mantelwellenfilter, vorzugsweise die Hülse, wenigstens teilweise in einer Griffeinrichtung der Messsonde untergebracht. Die Griffeinrichtung umgibt insbesondere wenigstens abschnittsweise das Sondenelement und vorzugsweise einen Schaftabschnitt.

Die Hülse umgibt das Sondenelement vorzugsweise wenigstens abschnittsweise koaxial. Das bietet eine besonders gute Filterwirkung. Insbesondere ist dabei wenigstens eine Beabstandung zwischen Hülse und Sondenelement vorgesehen. Die Beabstandung kann wenigstens teilweise gefüllt oder auch als Leerraum ausgebildet sein.

Zwischen der Hülse und dem Sondenelement ist vorzugsweise wenigstens ein Dielektrikum angeordnet. Dadurch kann die Größe des Mantelwellenfilters verkleinert werden. Das Dielektrikum ist insbesondere koaxial zu der Hülse und dem Sondenelement angeordnet. Insbesondere umgibt das Dielektrikum das Sondenelement wenigstens abschnittsweise koaxial. Die Hülse umgibt das Sondenelement und das Dielektrikum vorzugsweise wenigstens abschnittsweise koaxial.

Das Dielektrikum weist insbesondere eine erhöhte Permittivität und vorzugsweise eine erhöhte reelle Permittivität auf. Insbesondere wird ein Dielektrikum eingesetzt, dessen reelle Permittivität oberhalb eines definierten Grenzwerts liegt. Ein solches Dielektrikum ist besonders vorteilhaft, da eine zur Dämpfung benötigte Länge des Mantelwellenfilters und insbesondere der Hülse proportional zu dem Kehrwert der Wurzel der reellen Permittivität ist. Durch die hohe reelle Permittivität des Dielektrikums ist daher eine entsprechend geringe Länge der Hülse möglich. Das ermöglicht kompakte und gut handhabbare Abmessungen der Messsonde und der Filtereinrichtung. Insbesondere ist die reelle Permittivität des Dielektrikums wenigstens so hoch, dass eine Länge der Hülse ein Viertel der Wellenlänge der eingesetzten Hochfrequenzstrahlung im Dielektrikum beträgt.

Besonders bevorzugt ist ein Dielektrikum, das hohe Temperaturbelastungen durch Garprozesse ohne starke Alterungserscheinungen aushalten kann. Dieses temperaturbeständige Dielektrikum sollte Temperaturen von bis zu 250°C kurzzeitig ohne Schäden abkönnen.

Besonders bevorzugt ist die Hülse an einem Ende durch wenigstens eine Wandung geschlossen. Insbesondere ist die Wandung mit dem Sondenelement verbunden und vorzugsweise elektrisch leitend verbunden. Durch die Verbindung wird vorzugsweise ein einseitiger Kurzschluss erzeugt. So kann eine stehende Welle im Inneren der Hülse erzeugt werden. Insbesondere ist die Hülse nur einseitig mit dem Sondenelement elektrisch leitend verbunden.

Es ist bevorzugt, dass die Hülse an einem Ende offen ausgebildet ist. Das offene Ende ist bei einem betriebsgemäßen Einsatz der Messsonde vorzugsweise zu dem Gargut gerichtet. Dadurch können die stehenden Wellen bzw. Moden bzw. die Resonanzen der Filtereinrichtung besonders vorteilhaft gespeist werden. Insbesondere ist das offene Ende zu dem Gargut gerichtet, wenn das Sondenelement in das Gargut eingestochen ist. Vorzugsweise ist das durch die Wandung geschlossene Ende bei einem betriebsgemäßen Einsatz der Messsonde von dem Gargut weggerichtet. Die Hülse kann auch zu dem vom Gargut weg gerichteten Ende geöffnet sein.

Bevorzugt beträgt eine Länge der Hülse im Wesentlichen ein Viertel und insbesondere ein Viertel einer Wellenlänge der zum Garen in den Garraum eingebrachten Hochfrequenzstrahlung in dem Mantelwellenfilter und vorzugsweise in dem Dielektrikum. So können die auftretenden Mantelwellen besonders erheblich reduziert werden. Die Länge der Hülse kann sich auch auf die Wellenlänge der Hochfrequenzstrahlung außerhalb des Mantelwellenfilters bzw. des Dielektrikums und z. B. auf das Vakuum beziehen. Die Länge der Hülse kann auch ein-Viertel oder drei-Viertel oder fünf-Viertel oder sieben-Viertel der der Wellenlänge betragen.

Insbesondere bezieht sich die Länge der Hülse auf die Wellenlänge wenigstens einer bestimmten Frequenz der Hochfrequenzstrahlung. Insbesondere ist die bestimmte Frequenz dabei auf eine mittlere Frequenz der Hochfrequenzstrahlung bezogen. Die mittlere Frequenz beträgt z. B. 915 MHz oder 2,45 GHz. Die bestimmte Frequenz kann auch auf eine maximale oder minimale Frequenz bezogen sein. Die Länge der Hülse kann auf eine mittlere Wellenlänge der Hochfrequenzstrahlung bezogen sein. Die Wellenlänge kann auch auf eine maximale oder minimale Wellenlänge bezogen sein. Möglich ist auch eine längere oder kürzere Ausgestaltung der Hülse. Insbesondere sind die Länge und ein Durchmesser der Hülse aufeinander abgestimmt.

Die zum Garen in den Garraum eingebrachte Hochfrequenzstrahlung liegt insbesondere in einem Frequenzbereich zwischen 100 Megahertz und 10 Terahertz. Vorzugsweise liegt die Hochfrequenzstrahlung im Mikrowellenbereich. Insbesondere liegt der Frequenzbereich der Hochfrequenzstrahlung in wenigstens einem Frequenzbereich wenigstens eines ISM Bandes oder entspricht einem solchen. Beispielsweise liegt die Hochfrequenzstrahlung in einem Frequenzbereich zwischen 2,4 GHz und 2,5 GHz und/oder zwischen 902 MHz bis 928 MHz. Die Hochfrequenzstrahlung umfasst insbesondere eine Mehrzahl von Frequenzen. Insbesondere ist die Messsonde dazu geeignet und ausgebildet, in einem Garraum eines Gargeräts eingesetzt zu werden, wenn eine Hochfrequenzstrahlung mit den zuvor beschriebenen Eigenschaften in den Garraum eingebracht wird.

Der Mantelwellenfilter umfasst vorzugsweise wenigstens einen Außenleiter und wenigstens einen Innenleiter. Der Außenleiter wird insbesondere durch die Hülse bereitgestellt. Der Innenleiter wird insbesondere durch das Sondenelement bereitgestellt. Das bietet eine konstruktiv unaufwändige Umsetzung des Mantelwellenfilters. Insbesondere sind der Innenleiter und der Außenleiter des Mantelwellenfilters wenigstens abschnittsweise koaxial zueinander angeordnet. Insbesondere wird der Innenleiter des Mantelwellenfilters durch eine Außenwand und/oder Außenseite des Sondenelements bereitgestellt. Der Außenleiter und/oder der Innenleiter können auch durch andere geeignete Komponenten bereitgestellt werden. Der Außenleiter und/oder der Innenleiter können auch separat zur Hülse und/oder zum Sondenelement ausgebildet sein.

Insbesondere ist die Hülse einseitig mit dem Außenleiter des Sondenelements elektrisch leitend verbunden. Vorzugsweise ist die Wandung der Hülse mit dem Außenleiter des Sondenelements elektrisch leitend verbunden. Insbesondere ist die Hülse derart mit dem Außenleiter des Sondenelements verbunden, dass an wenigstens einem Ende der Hülse und insbesondere an dem geschlossenen Ende der Hülse ein Kurzschluss bereitgestellt wird. Das elektrische Feld hat an diesem Filterende einen Knotenpunkt der stehenden Welle und ist damit betragsmäßig gleich Null.

Vorzugsweise umfasst der Mantelwellenfilter wenigstens einen Außenleiter und wenigstens einen Innenleiter. Insbesondere werden der Außenleiter und/oder der Innenleiter dabei durch den zuvor beschriebenen Außenleiter bzw. Innenleiter bereitgestellt. Besonders bevorzugt sind Außenleiter und/oder der Innenleiter aus einem elektrisch leitenden Material gefertigt. Möglich und bevorzugt ist auch, dass der Außenleiter und/oder der Innenleiter mit wenigstens einer elektrisch leitenden Beschichtung ausgestattet sind. Dadurch kann die Dämpfung des Mantelwellenfilters weiter verbessert werden. Beispielsweise sind der Außenleiter und/oder der Innenleiter wenigstens teilweise und vorzugsweise vollständig aus Kupfer, Messing, Silber und/oder Gold oder einer Legierung daraus gefertigt. Vorzugsweise besteht die Beschichtung wenigstens teilweise und insbesondere vollständig aus Kupfer, Messing, Silber und/oder Gold oder einer Legierung daraus. Es können auch andere entsprechend gut leitende Materialien und/oder Beschichtungen vorgesehen sein. Möglich sind auch andere Arten einer Behandlung zur Verbesserung der Leitfähigkeit des Innenleiters bzw. Außenleiters.

In einer bevorzugten Ausgestaltung ist das Sondenelement wenigstens dort wenigstens abschnittsweise mit einer Beschichtung ausgestattet, wo das Sondenelement den Innenleiter des Mantelwellenfilters bereitstellt. Dabei weist die Beschichtung vorzugsweise eine höhere elektrische Leitfähigkeit als ein Grundwerkstoff des Sondenelements auf. Das bietet eine besonders wirtschaftliche Herstellung der Messsonde. Insbesondere ist die Beschichtung dabei wie zuvor beschrieben ausgebildet. Insbesondere ist das Sondenelement aus einer Stahllegierung und vorzugsweise aus einem Edelstahl als Grundwerkstoff gefertigt. Möglich sind auch andere geeignete Grundwerkstoffe.

Eine Ausgestaltung mit elektrisch gut leitenden Stoffen hat mehrere Vorteile. Der wesentliche Vorteil besteht darin, dass Stromdichten, die in dem Außenleiter und Innenleiter des Filters entstehen weniger Wärme hervorrufen. Dabei sind die Stromdichten, die sich vor allem als Oberflächenströme mit einer maximalen Tiefe der Skintiefe bemerkbar machen, bei den von dem außen anliegenden Feld und dem Design des Filters vorgegeben. Eine Materialänderung des Metalls ändert die Leitfähigkeit im Idealfall so, dass, obwohl die Oberflächenströme ähnlich groß sind, die joulsche Verlustleistung deutlich zurückgeht. Das bringt eine deutlich niedrigere Temperaturbelastung für den Filter, das Dielektrikum, die Sonde und den Griff mit sich.

Das Sondenelement weist bevorzugt wenigstens einen lanzenartigen Einstichabschnitt zum Anordnen in dem Gargut auf. Vorzugsweise umfasst das Sondenelement wenigstens einen an den lanzenartigen Einstichabschnitt anschließenden Schaftabschnitt zur Anordnung außerhalb des Garguts. Dabei ist der Mantelwellenfilter vorzugsweise wenigstens teilweise an dem Schaftabschnitt angeordnet. Insbesondere ist der Mantelwellenfilter außerhalb des Einstichabschnitts angeordnet. Insbesondere ist die Hülse an dem Schaftabschnitt angeordnet und/oder außerhalb des Einstichabschnitts angeordnet. Das bietet eine besonders gute Handhabung der Messsonde.

Die Messsonde umfasst vorzugsweise wenigstens einen Abstandshalter zur Vorgabe eines Mindestabstands des Mantelwellenfilters zu dem Gargut. Dieser Abstand ist vorteilhaft, weil dadurch das Feld im Garraum die Resonanz des Filters anregen kann. Wenn das Gargut direkt in Kontakt mit dem Filter stünde, wäre die Dämpfung des Filters deutlich schlechter. Der Abstandshalter ist vorzugsweise zwischen dem Schaftabschnitt und im Einstichabschnitt angeordnet. Ein solcher Abstandshalter bietet eine sehr benutzerfreundliche und komfortable Möglichkeit, der Mantelwellenfilter möglichst optimal zum Gargut auszurichten. Insbesondere ist der Abstandshalter an dem Sondenelement und vorzugsweise an dem Schaftabschnitt befestigt. Insbesondere ist der Abstandshalter als Teil des Griffes realisiert. Beispielsweise ist der Abstandshalter an einer Griffeinrichtung des Schaftabschnitts befestigt. Der Abstandshalter kann auch an dem Mantelwellenfilter und zum Beispiel an der Hülse angeordnet sein. Insbesondere gibt der Abstandshalter einen Mindestabstand der Hülse und besonders bevorzugt des offenen Endes der Hülse zu dem Gargut vor. Insbesondere ist der Abstandshalter in einem Abstand zu der Hülse angeordnet, welcher dem Mindestabstand entspricht. Insbesondere ist der Mantelwellenfilter bei einem betriebsgemäßen Einsatz der Messsonde kontaktlos zu dem Gargut angeordnet.

Der Mindestabstand beträgt insbesondere wenigstens 0,1 cm und maximal 10 cm. Der Mindestabstand kann auch wenigstens 0,3 cm und maximal 5 cm betragen. Bevorzugt beträgt der Mindestabstand wenigstens 0,5 cm und maximal 3 cm. Besonders bevorzugt beträgt der Mindestabstand wenigstens 0,8 cm und maximal 2 cm. Vorzugsweise beträgt der Mindestabstand im Wesentlichen 1 cm und insbesondere 1 cm. Das bietet eine besonders vorteilhafte Dämpfung der Mantelwellen unter den in einem Gargerät zu erwartenden Bedingungen. Durch den Mindestabstand wird sichergestellt, dass die Resonanz des Filters auch vom externen Feld im Garraum angeregt wird und der Filter damit wirksam ist.

In einer vorteilhaften Ausgestaltung umfasst das Sondenelement wenigstens einen Außenleiter und wenigstens einen Innenleiter. Dabei stellt der Außenleiter des Sondenelements vorzugsweise einen Innenleiter für den Mantelwellenfilter bereit. Das bietet eine besonders kompakte und unaufwendige Umsetzung der Messsonde. Der Innenleiter des Sondenelements ist insbesondere mit wenigstens einen Temperatursensor verbunden. Der Innenleiter und der Außenleiter des Sondenelements sind insbesondere mit dem Gargerät verbindbar.

Beispielsweise sind der Innenleiter und der Außenleiter des Sondenelements mittels wenigstens eines Koaxialkabels mit dem Gargerät verbindbar. Möglich ist auch, dass der Innenleiter und/oder der Außenleiter mit wenigstens einer Antenneneinrichtung verbunden sind. Insbesondere stehen der Innenleiter und/oder der Außenleiter des Sondenelements mit wenigstens einer Kommunikationseinrichtung in Wirkverbindung, welche eine drahtgebundene und/oder drahtlose Signalübertragung zu dem Gargerät ermöglicht.

Das erfindungsgemäße Gargerät umfasst wenigstens einen Garraum und wenigstens eine Hochfrequenzeinrichtung zum Erhitzen von Gargut in den Garraum durch Hochfrequenzstrahlung. Dabei umfasst das Gargerät wenigstens eine Messsonde, wie sie zuvor beschrieben wurde.

Auch das erfindungsgemäße Gargerät bietet viele Vorteile. Das Gargerät ermöglicht eine vorteilhafte Kombination aus Mikrowellenerwärmung und komfortabler Messung der Kerntemperatur zum Erzielen optimaler Zubereitungen. Die Messsonde bietet eine besonders reproduzierbare Messung der Kerntemperatur während Garvorgängen. Dadurch kann das Gargerät den Fertigzeitpunkt besonders zuverlässig erkennen und beispielsweise einen anderen Programmpunkt ansteuern oder den Garvorgang beenden.

Der Mantelwellenfilter ist insbesondere dazu geeignet und ausgebildet, Mantelwellen zu dämpfen, welche durch eine zum Garen in den Garraum eingebrachte Hochfrequenzstrahlung verursacht werden. Die Dämpfung kann dabei eine teilweise oder auch eine vollständige Reduzierung bzw. Unterdrückung der Mantelwellen bedeuten. Insbesondere ist der Mantelwellenfilter dazu geeignet und ausgebildet, die Mantelwellen kontaktlos zu dem Gargut zu dämpfen.

In der Regel wird man bei einem Gargerät, bei dem Hochfrequenzenergie zum Erhitzen des Garguts eingesetzt wird, ein Kabel zur Übertragung der Messsignale verwenden, da eine Funkeinrichtung zur Übertragung der Messsignale sehr aufwändig wäre. Prinzipiell wäre ein solcher Übertragungsweg aber auch möglich. Dann wird eine Schnittstelle benötigt, mit der Die Signale von der Messsonde zu einer Steuereinrichtung des Gargeräts übertragen werden.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines Gargerätes mit einer erfindungsgemäßen Messsonde in einer Vorderansicht;
- Figur 2: eine rein schematische Darstellung einer erfindungsgemäßen Messsonde; und
- Figur 3: eine rein schematische Darstellung einer weiteren erfindungsgemäßen Messsonde.

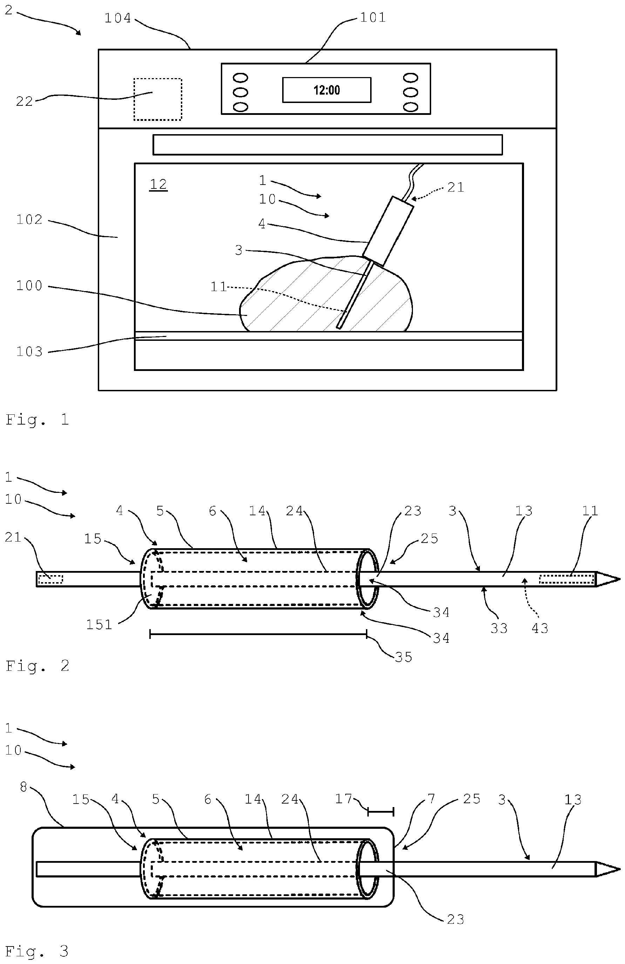

Die Figur 1 zeigt ein Gargerät 2 mit einer erfindungsgemäßen Messsonde 1. Das Gargerät 2 ist hier als ein Einbaugerät vorgesehen. Möglich ist aber auch, dass das Gargerät 2 als ein Standgerät oder auch als Herd ausgebildet ist.

Das Gargerät 2 ist hier als ein Backofen 104 mit Mikrowellenfunktion bzw. als ein Kombigerät ausgeführt. Das Gargerät 2 kann auch als ein Mikrowellengargerät bzw. Hochfrequenzgargerät ohne Backofenfunktion ausgebildet sein.

Das Gargerät 2 hat einen Garraum 12, welcher durch eine Tür 102 verschließbar ist. Für die Beheizung des Garraums 12 können verschiedene Heizquellen und insbesondere elektrische Widerstandsheizquellen zur Verfügung stehen. Beispielsweise kann der Garraum mit einer Umluftheizquelle, mit Oberhitze und/oder Unterhitze, im Heißluftbetrieb und/oder mit einer Grillfunktion beheizt werden.

Zum Erhitzen von Gargut 100 im Garraum 12 durch Hochfrequenzstrahlung, beispielsweise im Frequenzbereich von Mikrowellen, ist hier eine Hochfrequenzeinrichtung 22 vorgesehen. Die Hochfrequenzeinrichtung 22 basiert vorzugsweise auf Halbleitertechnologie. Möglich ist aber auch, dass die Hochfrequenzeinrichtung 22 als ein Magnetron ausgebildet ist oder ein solches umfasst. Das Gargut 100 befindet sich hier auf einem Gargutträger 103.

Das Gargerät 2 umfasst eine hier nicht dargestellte Steuereinrichtung zur Steuerung bzw. Regelung von Gerätefunktionen und Betriebszuständen. Über die Steuereinrichtung sind zudem verschiedene Betriebsarten und vorzugsweise verschiedene Programmbetriebsarten und Automatikfunktionen ausführbar.

Zur Bedienung des Gargerätes 2 ist eine Bedieneinrichtung 101 vorgesehen. Beispielsweise können darüber die Betriebsart, die Betriebstemperatur und/oder eine Programmbetriebsart bzw. Automatikfunktion ausgewählt bzw. eingestellt werden.

Im Garraum 12 befindet sich eine erfindungsgemäße Messsonde 1, welche als ein Messspieß 10 ausgebildet ist. Die Messsonde 1 dient zur Erfassung einer Innen- bzw. Kerntemperatur des Garguts 100. Dabei verbleibt die Messsonde 1 während des Garvorgangs im Garraum 12. Die Messsonde 1 weist ein Sondenelement 3 auf, welches hier teilweise in das Gargut 100 eingestochen ist. Zum Messen der Temperatur umfasst die Messsonde 1 hier einen Temperatursensor 11, welcher innerhalb des Sondenelements 3 untergebracht ist.

Die Messsonde 1 ist hier mit einem Kabel 21 ausgestattet, welches die Signale des Temperatursensors 11 an die Steuereinrichtung des Gargeräts 2 überträgt. Die mit der Messsonde 1 erfassten Temperaturen können in vielfältiger Weise durch die Steuereinrichtung ausgewertet und zur Überwachung des Garzustands des Garguts 100 sowie zur Gerätesteuerung eingesetzt werden.

Die Messsonde 1 umfasst ein Mantelwellenfilter 4 zur Dämpfung von Mantelwellen, welche durch die in den Garraum gesendete Hochfrequenzstrahlung hervorgerufen werden. Die elektrische Feldüberhöhung am Übergang Luft auf Gargut 100 wird dadurch erheblich gedämpft. Dadurch werden Verbrennungen oder Übergarungen des Garguts 100 am Einstichort verhindert.

Beispielsweise breiten sich Mantelwellen aus, welche bei ungünstiger Anordnung von Gargut 100, Messsonde 1 und Leitung mit einer nicht zu vernachlässigenden Amplitude auftreten. Die Mantelwelle ist dann begrenzt an den beiden Enden der Leitung. Zum einen ist sie an der Garraumaußenwand kurzgeschlossen und wird dort reflektiert. Zum anderen gibt es einen deutlichen Impedanzsprung an dem Übergang von Luft auf Gargut 100. Am Luft-Gargut-Übergang wird die Welle "kurzschlussähnlich" reflektiert und zum Teil verlustbehaftet in das Gargut 100 transmittiert und absorbiert. Dabei treten im Gargut 100 hohe elektrische Feldstärken auf. Diese elektrische Feldüberhöhung führt zu einer ungleichmäßigen Gesamterwärmung. Diese äußert sich im Lebensmittel durch Verbrennungen, Austrocknung oder auch Übergarungen. Zusätzlich führt die Impedanzänderung zu einer erhöhten Stromdichte in dem Sondenelement 3. Diese Stromdichte sorgt bei schlechteren metallischen Leitern wie z. B. Edelstahl zu einer starken Erhitzung des Sondenelements 3. Dieser wirkt dann im Lebensmittel 100 wie ein Heizstab, an dem das anliegende Gargut 100 festtrocknet. Zusätzlich erwärmt dies auch den Temperatursensor 11, sodass die gemessene Temperatur nicht der tatsächlichen Kerntemperatur des Garguts entspricht. Die hier vorgestellte Erfindung reduziert bzw. verhindert diese Effekte besonders effektiv und zuverlässig.

In der Figur 2 ist die Messsonde 1 der Figur 1 näher dargestellt. Das Sondenelement 3 umfasst einen lanzenartigen Einstechabschnitt 13 zum Einstechen in das Gargut 100 und einen Schaftabschnitt 23, welcher außerhalb des Garguts 100 verbleibt.

Der Temperatursensor 11 ist in dem Sondenelement 13 angeordnet und über einen Innenleiter 43 mit der Kommunikationseinrichtung 21 verbunden. Dabei kann die Außenseite des Sondenelements 3 als Außenleiter 33 verwendet werden.

Der Mantelwellenfilter 4 umfasst hier eine Hülse 5, welche den Schaftabschnitt 23 koaxial umgibt. Zwischen der Hülse 5 und dem Sondenelement 3 ist ein Dielektrikum 6 angeordnet. Die Hülse 5 und das Dielektrikum 6 sind hier teilweise transparent dargestellt.

Die Hülse 5 ist an einem Ende 15 durch eine Wandung 151 geschlossen. Die Wandung 151 ist mit dem Sondenelement 3 bzw. dessen Außenleiter 33 elektrisch leitend verbunden. An einem gegenüberliegenden Ende 25 ist die Hülse 5 offen ausgebildet.

Der Mantelwellenfilter 4 umfasst hier einen Außenleiter 14 und einen Innenleiter 24. Dabei wird der Außenleiter 14 durch die Hülse 4 bereitgestellt. Der Innenleiter 24 wird durch den Schaftabschnitt 23 bzw. den Außenleiter 33 des Sondenelements 3 bereitgestellt. So dient der Außenleiter 33 zugleich auch als Innenleiter 24 für der Mantelwellenfilter 4.

Der Außenleiter 14 und der Innenleiter 24 können hier aus einem Werkstoff gefertigt sein, welcher mit einer elektrisch leitenden Beschichtung 34 wenigstens abschnittsweise überzogen ist. Die Beschichtung 34 ist beispielsweise als eine Kupferbeschichtung oder eine Beschichtung 34 aus einer Kupferlegierung ausgebildet. Dabei wurde die Beschichtung 34 hier auf einen Grundwerkstoff der Hülse 5 und des Sondenelements 3 aufgetragen. Der Grundwerkstoff ist zum Beispiel ein Edelstahlmaterial. Die Beschichtung wurde nur dort auf den Schaftabschnitt 23 aufgetragen, wo der Schaftabschnitt 23 den Innenleiter 24 für der Mantelwellenfilter 4 bereitgestellt. Alternativ sind Außenleiter 14 und Innenleiter 24 vollständig aus einem Werkstoff mit hohem Leitwert, beispielsweise Kupfer, gefertigt. Der Einstichabschnitt 13 sollte aus einem lebensmittelverträglichen Material, beispielsweise Edelstahl, hergestellt sein.

Eine Lauflänge 35 der Welle im Mantelwellenfilter 4 ist hier so bemessen, dass sie einem Viertel einer Wellenlänge im Dielektrikum der zum Garen vorgesehenen Hochfrequenzstrahlung bei einer bestimmten Frequenz beträgt, wenn die Hochfrequenzstrahlung durch das Dielektrikum 6 tritt. Dabei weist die hier gezeigte Hülse 5 einen Durchmesser auf, welcher hinsichtlich der benötigten Dämpfung an die Länge 35 angepasst ist.

Die Figur 3 zeigt eine Weiterbildung der in der Figur 2 gezeigten Messsonde 1. Die Messsonde 1 wurde hier mit einem Abstandshalter 7 ausgestattet. Der Abstandshalter 7 dient dazu, einen Mindestabstand 17 zwischen dem offenen Ende 25 der Hülse 5 und einem Gargut 100 einzuhalten. Dazu ist der Abstandshalter 7 hier so ausgelegt, dass er die Einstichtiefe des Einstichabschnitts 13 in das Gargut 100 begrenzt. So verhindert der Abstandshalter 7 ein zu nahes Anordnen der Hülse 5 an dem Gargut 100, was zu einer reduzierten Dämpfung führen würde.

Der Mindestabstand 17 beträgt hier beispielsweise 1 cm. Wenn die Messsonde 1 also bis zum Abstandshalter 7 in das Gargut 100 eingestochen ist, verbleibt ein Abstand von 1 cm zwischen dem offenen Ende 25 der Hülse 5 und der Außenseite des Garguts 100. Dieser Abstand ist nötig, um die Resonanz in dem Mantelwellenfilter 4 anzuregen und so die Wirksamkeit zu erreichen.

In der hier gezeigten Ausgestaltung ist der Abstandshalter 7 Teil einer Griffeinrichtung 8. Die Griffeinrichtung 8 dient zum besonders sicheren Hantieren mit der Messsonde 1. Dabei ist die Griffeinrichtung 8 so ausgestaltet, dass ein optimaler Eintritt der Mantelwellen in das offene Ende 25 der Hülse 5 möglich ist. Dazu weist die Griffeinrichtung 8 beispielsweise eine entsprechende Permittivität auf oder ist im Bereich des offenen Endes 25 offen oder entsprechend durchlässig ausgebildet. Um als Abstandshalter 7 zu dienen, steht die Griffeinrichtung 8 beispielsweise in der Länge des Mindestabstands 17 über das offene Ende 5 und 20 der Hülse 5 hinaus.

Die hier vorgestellte Erfindung dämpft eine sich in Luft ausbreitende Mantelwelle vor dem Impedanzsprung bei dem Gargut-Luft-Übergang. So wird eine Erhöhung des elektrischen Feldes im Gargut wirkungsvoll verhindert. Bei dem Mantelwellenfilter 4 handelt es insbesondere um einen Mikrowellenresonator, der auf die Wellenlänge der Mikrowellenfrequenz abgestimmt ist. Dabei wird vorzugsweise der Lambda-Viertel-Sonderfall ausgenutzt und die gargutseitige Abschlussimpedanz der Mantelwelle transformiert, sodass die transformierte gargutseitige Impedanz deutlich größer ist als die Impedanz der Mantelwelle auf der Leitung bzw. in der Luft. Idealerweise ist die Impedanz so hochohmig (Z_LM, transponiert gegen unendlich), dass es zur totalen Reflexion kommt. Es gibt dann vorzugsweise keinen Anteil der Mantelwelle mehr, der an der tatsächlichen Grenzschicht Luft-Gargut in das Gargut reflektiert oder transmittiert wird.

Der Mantelwellenfilter ist vorzugsweise als Hülse 5 ausgeführt, die koaxial um einen Außenleiter 33 des Sondenelements 3 angebracht ist. Der Zwischenraum zwischen Außenleiter 33 und der Hülse 5 ist hier mit einem Dielektrikum 6 ausgefüllt. Die Hülse 5 ist dabei einseitig leitend mit dem Außenleiter 33 verbunden und bildet damit einen Kurzschluss (Z=O) an diesem Ende der Hülse. Das andere Ende der Hülse 5 ist offen.

Durch den einseitigen Kurzschluss wird ein eindeutiger Mode im Inneren des Filters bzw. der Hülse 5 erzeugt. Die offene Seite des Filters 5 liegt an der Gargutseite des Filters. Von der offenen Seite wird der Mode bzw. die Resonanz des Filters gespeist. Die Länge des Filters 5 ist hier so bestimmt, dass die Wellenlänge im Dielektrikum bei der verwendeten Frequenz Lambda-Viertel beträgt (Formel hierzu: l_filter * 4 = c_0 * eps^-0,5 * f^-1 * 0,25).

Besonders sinnvoll ist es den Filter aus einem gut leitenden Material zu fertigen, da die Stromdichten im Filter bei großer Amplitude der Mantelwelle ebenfalls groß werden können. Damit aufgrund der Stromdichte keine oder nur geringe joulesche Verlustwärme im Filter entsteht, muss der ohmsche Widerstand gering gehalten werden. Möglich ist dabei ein Vollmaterial aus einem guten Leiter oder eine Beschichtung des Filters mit einer leitenden Oberfläche, da der Strom aufgrund des Skin-Effekts nur an der Oberfläche fließt. Mögliche Materialien sind beispielsweise Gold, Silber, Kupfer oder Messing.

Darüber hinaus ist es sinnvoll auch den Innenleiter 24 des Filters, welches der Außenleiter 33 des Sondenelements 3 bzw. Spießes ist, aus einem guten Leiter zu fertigen, da auch hier erhöhte Stromdichten zustande kommen.

Ebenfalls sinnvoll ist das Verwenden eines möglichst reellen (also verlustarmen) Dielektrikums 6, damit auch bei voller Resonanz im Filter keine überproportionale Wärme im Dielektrikum entsteht. Darüber hinaus sollte das Dielektrikum die hohen Temperaturen in einem beheizten Garraum 12 bzw. Backofen 104 aushalten. Bevorzugt wird ein Dielektrikum mit hoher rein reeller Permittivität verwendet, da die benötigte Länge des Filters proportional zu dem Kehrwert der Wurzel der Permittivität ist.

Der Abstand 17 zwischen Gargut 100 und Mantelwellenfilter sollte so gewählt sein, dass die Mantelwelle den Filter anregen kann. Ist der Abstand zu kurz, so kann der Filter nicht ausreichend angeregt werden. Ist der Abstand zu lang, so kann sich zwischen Filterende und Gargut erneut eine kleine Mantelwelle ausbreiten. Die mechanische Konstruktion des Abstandhalters 7 sorgt hierfür den gewünschten idealen Abstand.

Vorteilhafte Ausführungsvarianten umfassen andere Transpositionen des Filter-Abschlusses, welche an dem oberen Ende 15 des Filters hochohmig sind. Dabei kann zum Beispiel das Filterende offen sein und die Filterlänge Lambda/2 betragen. Möglich ist auch, dass das Filterende kurzgeschlossen ist und die Filterlänge 4/3-Lambda beträgt.

Der Mantelwellenfilter ist bei seiner Auslegung an die nachfolgende Impedanz, also die Impedanz des Garguts angepasst.

Die Wirkungsweise eines Mantelwellenfilters lässt sich auch mit der Impedanz des Filters (hochohmige Serienimpedanz, rein reaktiv, Leerlauf) erklären. Wird diese Impedanz an der falschen Stelle (innerhalb einer hochohmigen Umgebung) eingebracht, so wird die Wirkung geschmälert. Wird sie an der richtigen Stelle (niederohmige Umgebung) eingebracht, so kann sie voll wirken. Eine geeignete Stelle wäre demnach auch in der Nähe der Garraumwand. Da aber eine Totalreflexion auch an einem Leerlauf stattfindet und die am Gargut wirksame Impedanz und damit die Stromstärke und Feldstärke in der Nähe des Garguts maßgeblich durch die Leitungslänge (transformierende Wirkung der Leitung) festgelegt wird, ist es besser, den Mantelwellenfilter am Gargut zu platzieren und somit an dieser Stelle eine hochohmige Serienimpedanz zu erzwingen.

### Bezugszeichenliste

- 1: Messsonde
- 2: Gargerät
- 3: Sondenelement
- 4: Mantelwellenfilter
- 5: Hülse
- 6: Dielektrikum
- 7: Abstandshalter
- 8: Griffeinrichtung
- 10: Messspieß
- 11: Temperatursensor
- 12: Garraum
- 13: Einstichabschnitt
- 14: Außenleiter
- 15: Ende
- 17: Mindestabstand
- 21: Kommunikationseinrichtung
- 22: Hochfrequenzeinrichtung
- 23: Schaftabschnitt
- 24: Innenleiter
- 25: Ende
- 33: Außenleiter
- 34: Beschichtung
- 35: Länge
- 43: Innenleiter
- 100: Gargut
- 101: Bedieneinrichtung
- 102: Tür
- 103: Gargutträger
- 104: Backofen
- 151: Wandung

## Patentansprüche

1. Messsonde (1), insbesondere Messspieß (10), zur Erfassung einer Temperatur eines Garguts (100) in einem Garraum (12) eines Gargeräts (2) während eines Garvorgangs, umfassend wenigstens einen Temperatursensor (11) und wenigstens ein Sondenelement (3) zum Anordnen in und/oder an dem Gargut (100),
**gekennzeichnet durch**
wenigstens ein Mantelwellenfilter (4) zur Dämpfung von sich im Bereich der Messsonde (1) ausbreitenden Mantelwellen, welche durch eine zum Garen in den Garraum (12) eingebrachte Hochfrequenzstrahlung hervorgerufen werden.

2. Messsonde (1) nach dem vorhergehenden Anspruch, **dadurch gekennzeichnet, dass** der Mantelwellenfilter (4) wenigstens eine Hülse (5) umfasst.

3. Messsonde (1) nach dem vorhergehenden Anspruch, **dadurch gekennzeichnet, dass** die Hülse (5) das Sondenelement (3) wenigstens abschnittsweise koaxial umgibt.

4. Messsonde (1) nach einem der beiden vorhergehenden Ansprüche, **dadurch gekennzeichnet, dass** zwischen der Hülse (5) und dem Sondenelement (3) wenigstens ein Dielektrikum (6) angeordnet ist.

5. Messsonde (1) nach einem der drei vorhergehenden Ansprüche, **dadurch gekennzeichnet, dass** die Hülse (5) an einem Ende (15) durch wenigstens eine Wandung (151) geschlossen ist und dass die Wandung (15) mit dem Sondenelement (3) verbunden ist und vorzugsweise elektrisch leitend verbunden ist.

6. Messsonde (1) nach einem der vier vorhergehenden Ansprüche, **dadurch gekennzeichnet, dass** die Hülse (5) an einem Ende (25) offen ausgebildet ist und dass das offene Ende (25) bei einem betriebsgemäßen Einsatz der Messsonde (1) zu dem Gargut (100) gerichtet ist.

7. Messsonde (1) nach einem der fünf vorhergehenden Ansprüche, **dadurch gekennzeichnet, dass** eine Lauflänge (35) der Welle im Mantelwellenfilter (4) im Wesentlichen ein Viertel einer Wellenlänge der zum Garen in den Garraum (12) eingebrachten Hochfrequenzstrahlung in dem Mantelwellenfilter (4) und vorzugsweise in dem Dielektrikum (6) beträgt.

8. Messsonde (1) nach einem der sechs vorhergehenden Ansprüche, **dadurch gekennzeichnet, dass** der Mantelwellenfilter (4) wenigstens einen Außenleiter (14) und wenigstens einen Innenleiter (24) umfasst und dass der Außenleiter (14) durch die Hülse (5) bereitgestellt wird und dass der Innenleiter (24) durch das Sondenelement (3) bereitgestellt wird.

9. Messsonde (1) nach einem der vorhergehenden Ansprüche, **dadurch gekennzeichnet**, das der Mantelwellenfilter (4) wenigstens einen Außenleiter (14) und wenigstens einen Innenleiter (24) umfasst und dass der Außenleiter (14) und/oder der Innenleiter (24) aus einem elektrisch leitenden Material gefertigt sind und/oder dass der Außenleiter (14) und/oder der Innenleiter (24) mit wenigstens einer elektrisch leitenden Beschichtung (34) ausgestattet sind.

10. Messsonde (1) nach dem vorhergehenden Anspruch, **dadurch gekennzeichnet, dass** das Sondenelement (3) wenigstens im Bereich des Innenleiters (24) und des Außenleiters (14) ein Material mit erhöhter elektrischer Leitfähigkeit umfasst.

11. Messsonde (1) nach dem vorhergehenden Anspruch, **dadurch gekennzeichnet, dass** das Sondenelement (3) wenigstens dort wenigstens abschnittsweise mit einer Beschichtung (34) ausgestattet ist, wo das Sondenelement (3) den Innenleiter (24) des Mantelwellenfilters (4) bereitstellt und dass die Beschichtung (34) eine höhere elektrische Leitfähigkeit als ein Grundwerkstoff des Sondenelements (3) aufweist.

12. Messsonde (1) nach einem der vorhergehenden Ansprüche, **dadurch gekennzeichnet, dass** das Sondenelement (3) wenigstens einen lanzenartigen Einstichabschnitt (13) zum Anordnen in dem Gargut (100) und wenigstens einen daran axial anschließenden Schaftabschnitt (23) zur Anordnung außerhalb des Garguts (100) umfasst und dass der Mantelwellenfilter (4) wenigstens teilweise an dem Schaftabschnitt (23) angeordnet ist.

13. Messsonde (1) nach einem der vorhergehenden Ansprüche, **dadurch gekennzeichnet, dass** wenigstens ein Abstandshalter (7) zur Vorgabe eines Mindestabstands (17) des Mantelwellenfilters (4) zu dem Gargut (100) vorgesehen ist, und dass der Abstandshalter (7) vorzugsweise zwischen dem Schaftabschnitt (23) und dem Einstichabschnitt (13) angeordnet ist.

14. Messsonde (1) nach dem vorhergehenden Anspruch, **dadurch gekennzeichnet, dass** der Mindestabstand (17) wenigstens 0,1 cm und maximal 10 cm beträgt.

15. Messsonde (1) nach einem der Ansprüche 13 oder 14, **dadurch gekennzeichnet**, der Anstandshalter (7) in eine Griffeinrichtung (8) integriert ist.

16. Messsonde (1) nach einem der vorhergehenden Ansprüche, **dadurch gekennzeichnet, dass** das Sondenelement (3) wenigstens einen Außenleiter (33) und wenigstens einen Innenleiter (43) aufweist und dass der Außenleiter (33) des Sondenelements (3) einen Innenleiter (24) für den Mantelwellenfilter (4) bereitstellt.

17. Gargerät (2) mit wenigstens einem Garraum (12) und mit wenigstens einer Hochfrequenzeinrichtung (22) zum Erhitzen von Gargut (100) im Garraum (12) durch Hochfrequenzstrahlung,
**umfassend**
wenigstens eine Messsonde (1) nach einem der vorhergehenden Ansprüche.
